# EUROPEAN PATENT APPLICATION

(11) **EP 1 433 804 A1**
(43) Date of publication of application: **30.06.2004**
(21) Application number: 02027017.9
(22) Date of filing: 03.12.2002
(51) Int. Cl.: C08G 63/183, C08G 63/189, C08G 63/672, B65D 1/02, B29C 49/08

(54) **Copolyester composition for manufacturing large volume polyester bottle**

(71) Applicant: NAN YA PLASTICS CORP., Taipei (TW)
(72) Inventor: Zo-Chun, Jen, Taipei (TW)
(74) Representative: Helms, Joachim, Dipl.-Ing. Patentanwalt

(57) **Abstract**

A copolyester composition of polyethylene terephthalate (PET) is invented to manufacture a bottle embryo having a weight of over 600 grams and a thickness of over 7.0 centimeters, and to manufacture a container having an inner volume of over 10 litters, the main component of said copolyester composition being polyethylene terephthalate resin, said copolyester composition further containing X mole% of isophthalic acid based on said copolyester, Y mole% of diethylene glycol based on said copolyester, Z mole% of 2,6-naphthalene dicarboxylic acid based on said copolyester, wherein X, Y, Z conforming to the following conditions:
2.5 □ X □ 6.0,
2.5 □ Y □ 5.0,
0 □ Z □ 5.0; and
intrinsic viscosity of said copolyester is between 0.75 and 0.85 dl/g.

## Description

### BACKGROUND OF THE INVENTION

### 1. Field of this invention

The present invention relates to a copolyester composition of polyethylene terephthalate (PET), more particularly it relates to a copolyester composition which is utilized to manufacture a polyester bottle having a volume of 10 litters at least, even a volume of 5 gallons, and to manufacture a bottle embryo having a weight of over 600 grams and a thickness of over 7.0 centimeters, and to manufacture a container having an inner volume of over 10 litters.

### 2. Description of Prior Art

As the public pay more attention to the quality of drinking water, many public sites of offices usually prepare distilled water contained in 5-gallon container for people to drink. Therefore, bulk water market is expanding gradually.

To the present time, this sort of bulk water container is mainly made from polyvinyl chloride (PVC) or from polycarbonate (PC). As far as environmental protection is concerned, PVC containers due to its lack of environmental protection have been reduced in use gradually. In addition, PC containers have excellent quality in practice but its material is relatively more expensive in cost.

The composition of PET copolyester widely utilized to manufacture bottles for carbonic acid beverage, mineral water, or tea beverage normally contains 0 ∼ 3 mole% of isophthalic acid based on copolyester or 1.5 ∼ 4.0 mole% of diethylene glycol based on copolyester and is characterized in being easy to crystallize during inject-stretch-blow-molding process, so it being suitable for manufacturing bottle embryo having a thickness of about 3 ∼ 4 mm and a weight of only about 100 ∼ 120 grams maximum, and for manufacturing bottle having an inner volume less than 5 litters; while this sort of copolyester is processed to produce bottle embryo having a thickness of about over 7 cm and a weight of over 600 grams, a situation of crystalline haze occurs to bottle embryo, which causes the successive blow-molding process being unstable; on the other hand, extending the cooling time of bottle embryo in order to prevent the situation of crystalline haze to bottle embryo causes lower productivity and economical invalidity.

In order to solve the aforementioned problem, US patent No. 6309718B1 discloses a copolyester composition for manufacturing bottles having a weight of over 200 grams and an inner volume of several gallons. The composition of said copolyester contains 4 ∼ 10 mole% of cyclohexane dimethanol or 6 ∼ 17 mole% of isophthalic acid or combination of the above both compounds; moreover, dicarboxylic acid compound such as naphthalene-2,6-dicarboxylic acid having a content of 50 mole% maximum is further added as a component of said copolyester; the intrinsic viscosity of said copolyester is 0.75 ∼ 0.85 dl/g.

### SUMMARY OF THIS INVENTION

The present invention discloses a composition of polyethylene terephthalate copolyester which is utilized to manufacture a bottle embryo having a thickness of over 7.0 centimeters and a weight of over 600 grams, and to manufacture a polyester bottle having an inner volume of over 10 litters.

The main component of the PET copolyester composition disclosed by the present invention is polyethylene terephthalate resin, said copolyester composition further containing X mole% of isophthalic acid, Y mole% of diethylene glycol, Z mole% of 2,6-naphthalene dicarboxylic acid, wherein X, Y, Z conforming to the following conditions:
2.5 □ X □ 6.0,
2.5 □ Y □ 5.0,
0 □ Z □ 5.0; and
intrinsic viscosity of said copolyester is between 0.75 and 0.85 dl/g.

The composition of the PET copolyester disclosed by the present invention is utilized to manufacture large inner volume polyester bottle by an injection-stretch-blow-molding method well known to the art; said method is to manufacture the PET copolyester disclosed by the present invention into transparent bottle embryo by an injection machine; then, the bottle embryo is heated by near infrared light tube up to above glass transition temperature and is further blown to be a bottle.

The large inner volume bottle made from the PET copolyester composition disclosed by the present invention has excellent transparency and is strong enough to contain over 10 litters, even 5 gallons of water without the problem of bottle being broken during delivery and is able to be cleaned and reused several times. Moreover, the copolyester of the present invention has an advantage of lower cost than that of polycarbonate.

### DETAILED DESCRITION OF THIS INVENTION AND THE PREFERRED EMBODIMENTS

The present invention discloses a copolyester composition, the main component of said copolyester composition being polyethylene terephthalate resin, said copolyester composition further containing X mole% of isophthalic acid based on said copolyester, Y mole% of diethylene glycol based on said copolyester, Z mole% of 2,6-naphthalene dicarboxylic acid based on said copolyester, wherein X, Y, Z conforming to the following conditions:
2.5 □ X □ 6.0,
2.5 □ Y □ 5.0,
0 □ Z □ 5.0; and
isophthalic acid is added during melting reaction process, and except the diethylene glycol spontaneously generated during melting reaction, the insufficient diethylene glycol is needed to be added to reach the target content.

The PET copolyester of the present invention is prepared by melting polymerization well known to the art of polyester, the method is: into the reaction slurry of purified terephthalic acid and ethylene glycol, adding 2.5 ∼ 6.0 mole% of isophthalic acid based on the final copolyester, and adding the insufficient diethylene glycol so as to make the summation of the insufficient diethylene isophthalic acid and the spontaneously generated diethylene glycol be 2.5 ∼ 5.0 mole% based on the final copolyester, and further adding 2,6-naphthalene dicarboxylic acid with a content of no more than 5.0 mole% based on the final copolyester; then, proceeding with esterification reaction at reaction temperature of 250 ∼ 260 .degree.C.; adding catalyst, heat stabilizer, toner, and other additives such as antioxidant, light stabilizer, and lubricant before the completion of esterification reaction; further, proceeding with prepolymerization reaction at reaction temperature of 265 ∼ 275 .degree.C. and at vacuum environment; next, proceeding with polycondensation reaction at reaction temperature of 275 ∼ 285 .degree.C. and at 1 torr vacuum intensity; while the intrinsic viscosity of the polymer reaches at least 0.55 dl/g, the polymer is unloaded, cooled, and cut into column shape polyester chips.

The polyester chips obtained from aforementioned melting polymerization reaction are proceeded with solid phase polymerization reaction to raise the intrinsic viscosity of chips up to 0.75 ∼ 0.85 dl/g; said solid phase polymerization proceeds with a continuous process by crystallization, drying, preheating up to 205 ∼ 220 .degree.C., and raising intrinsic viscosity in a solid phase polymerization tank through which a nitrogen gas is continuously led in order to get rid of the ethylene glycol and water produced by reaction.

The obtained copolyester is dried and is made by an injection machine into bottle embryo having a weight of over 600 grams, a thickness of over 7 cm, a length of 36 cm, the weight of bottle embryo being more preferably between 600 and 800 grams, the thickness of bottle embryo being more preferably between 7.5 and 9.5 cm, the length of bottle embryo being more preferably between 36 and 42 cm, and injection cycle being 90 ∼ 130 seconds. The aforementioned bottle embryo made from the copolyester of the present invention has excellent transparency without crystalline haze.

The present invention further utilizes a differential scanning calculator to analyze the copolyester of the present invention. The test procedure is: taking about 3 mg of copolyester being solid phase polymerized, raising the temperature up to 300□ to melt the copolyester, maintaining the melted copolyester for 5 minutes, quick cooling down to room temperature, raising the temperature in a raising rate of 20□/min to have the polymer get through glass transition temperature zone, crystallizing temperature zone, and melting point temperature zone, wherein the area encircled by the peak of crystallizing temperature zone represents a released heat by crystallizing; there exists a common point on the copolyester of the present invention that the areas of released heat by crystallizing are all less than 10 joules/gram, more preferably less than 6 joules/gram, this data is far less than the areas of released heat by crystallizing for ordinary copolyester used for manufacturing smaller inner volume polyester bottle, normally the released heat by crystallizing for ordinary copolyester is above 15 joules/gram, even higher than 25 joules/gram. Therefore, the copolyester of the present invention restrains the crystallizing rate and takes shorter processing cycle to produce transparent, thick, and heavy bottle embryo by adding common copolymerized modifier.

The bottle embryo of the present invention is further manufactured into a container having inner volume greater than 10 ∼ 20 litters by using stretch-blow-molding method which is well known to the art. Said method uses near infrared light to heat up bottle embryo to a temperature of over glass transition temperature, and the stretch-blow-molding is best conducted while the temperature is 20□ ∼ 40 □ higher than glass transition temperature. The large inner volume container made from the copolyester composition of the present invention has excellent transparency and strength and is able to be cleaned and reused for a plurality of times so that it is very environmentally valuable.

### Examples

The following examples are given to illustrate characteristics of the present invention but not to limit the invention.

### Example 1

Having 79.54 Kg of purified terephthalic acid (PTA), 4.755 Kg of isophthalic acid (IPA), 1.38 Kg of diethylene glycol (DEG), and 37.78 Kg of ethylene glycol (EG) stirred together to form a well-distributed slurry which is then heated up to 260□ to proceed with esterification reaction, esterification pressure being maintained at 1.5 ∼ 2.0 Kg/cm²; while the esterification ratio reaches higher than 95 %, adding 14 grams of phosphoric acid, 45 grams of antimony acetate, and 100 grams of cobaltous acetate; raising the temperature up to 270□ to proceed with prepolymerization reaction, the reaction pressure being controlled at 760 ∼ 20 torr; after 1 hour of reaction, further raising the temperature up to 2800, the vacuum intensity being decreased down to below 1 torr, proceeding with polycondensation reaction until the intrinsic viscosity reaching 0.60 dl/g; then, injecting it through a die head, cooling, and cutting into column shape polyester chips.
Analyzing the polyester chips, the IPA content thereof being 5.5 mole% based on copolyester, and the DEG content thereof being 2.5 mole% based on copolyester.

Said chips are loaded in a twin-awl revolving vacuum drying tank having an environment of 200□ ∼ 220□ of temperature and lower than 1 torr of vacuum intensity to proceed with solid phase polymerization reaction in order to raise the intrinsic viscosity of the polyester chips up to 0.80 dl/g.

Analyzing said copolyester having been solid-phase polymerized by using a differential scanning calculator (DSC) manufactured by Perkin Elmer corp.; first, quickly raising the temperature up to 300□ to melt the polyester, then quickly cooling it down, further heating the polyester with a temperature raising rate of 20□/min; the released heat, by crystallizing, of said polyester is 4.5 joules/gram.

Injecting the copolyester, which has been solid-phase polymerized, by an injection machine at a melting temperature of 275□ ∼ 280□ to manufacture bottle embryo having a weight of 685 grams, a thickness at bottle body of 8.5 ∼ 9.0 mm, and a length of 410 mm. The bottle embryo made from said copolyester has excellent transparency without crystalline haze.

The manufactured bottle embryo is further put into a stretch-blow-molding machine to blow-molding, while the temperature of the bottle embryo being 110□, the bottle embryo into a container having an inner volume of 5 gallons; the process of stretch-blow-molding is stable, and the transparency and strength of the container are all good.

### Example 2

Process is the same as that of Example 1, however, the composition of copolyester contains 4.5 mole% of IPA, 2.5 mole% of DEG; the intrinsic viscosity of the copolyester is 0.81 dl/g after solid phase polymerization.

Analyzed with differential scanning calculator, the released heat by crystallizing is 6.8 joules/gram.

The manufactured bottle embryo, by an injection machine, has good transparency without crystalling haze; said bottle embryo is further put into a stretch-blow-molding machine to blow-molding stably into a bottle having an inner volume of 5 gallons; the transparency and strength of the bottle are all good.

### Example 3

Process is the same as that of Example 1, however, the composition of copolyester contains 2.5 mole% of IPA, 2.5 mole% of DEG, and 5.0 mole% of naphthalene-2,6-dicarboxylic acid; the intrinsic viscosity of the copolyester is 0.78 dl/g after solid phase polymerization.

Analyzed with differential scanning calculator, the released heat by crystallizing is 2.2 joules/gram.

The manufactured bottle embryo, by an injection machine, has good transparency without crystalling haze; said bottle embryo is further put into a stretch-blow-molding machine to blow-molding stably into a bottle having an inner volume of 5 gallons; the transparency and strength of the bottle are all good.

### Comparative Example 1

Process is the same as that of Example 1, however, the composition of copolyester contains 2.4 mole% of IPA, 2.4 mole% of DEG; the intrinsic viscosity of the copolyester is 0.80 dl/g after solid phase polymerization.

Analyzed with differential scanning calculator, the released heat by crystallizing is 17.3 joules/gram.

The manufactured bottle embryo, by an injection machine, has crystalling haze and bad transparency; said bottle embryo is further put into a stretch-blow-molding machine, heated by near infrared light tube, to blow-molding into a bottle having an inner volume of 5 gallons; the bottle turns hazy and easily breaks during blow-molding process.

### Comparative Example 2

Process is the same as that of Example 1, however, the composition of copolyester contains 2.4 mole% of IPA, 2.4 mole% of DEG; the intrinsic viscosity of the copolyester is 0.84 dl/g after solid phase polymerization.

Analyzed with differential scanning calculator, the released heat by crystallizing is 15.5 joules/gram.

The manufactured bottle embryo, by an injection machine, has crystalling haze and bad transparency; said bottle embryo is further put into a stretch-blow-molding machine, heated by near infrared light tube, to blow-molding into a bottle having an inner volume of 5 gallons; the bottle turns hazy and easily breaks during blow-molding process.

## Claims

1. A copolyester composition of polyethylene terephthalate (PET), which is utilized to manufacture a bottle embryo having a weight of over 600 grams and a thickness of over 7.0 centimeters, and to manufacture a container having an inner volume of over 10 litters, the main component of said copolyester composition being polyethylene terephthalate resin, said copolyester composition further containing X mole% of isophthalic acid based on said copolyester, Y mole% of diethylene glycol based on said copolyester, Z mole% of 2,6-naphthalene dicarboxylic acid based on said copolyester, wherein X, Y, Z conforming to the following conditions:
2.5 □ X □ 6.0,
2.5 □ Y □ 5.0,
0 □ Z □ 5.0; and
intrinsic viscosity of said copolyester is between 0.75 and 0.85 dl/g.

2. The copolyester composition of polyethylene terephthalate (PET) as defined in claim 1, the crystallizing released heat of the obtained copolyester, which is analyzed by a differential scanning calculator in a temperature raising rate of 20□/min, is less than 10 joules/gram.

3. A bottle embryo, which is made from the copolyester with composition as defined in claim 1 through an injection machine and provided with a weight of over 600 grams and a thickness of over 7.0 cm.

4. The bottle embryo as defined in claim 3, of which the weight is between 600 and 800 grams, the thickness is between 7.5 and 9.5 cm, and the length is between 36 cm and 42 cm.

5. A polyester container, which is made from the bottle embryo as defined in claim 3 through stretch-blow-molding and provided with an inner volume of greater than 10 litters.
